# EUROPÄISCHE PATENTSCHRIFT

(11) **EP 2 314 842 B1**
(45) Veröffentlichungstag und Bekanntmachung des Hinweises auf die Patenterteilung: **25.01.2012**
(21) Anmeldenummer: 10176994.1
(22) Anmeldetag: 16.09.2010
(51) Int. Cl.: F02B 37/18, F01D 17/10

(54) **Verschlussklappe für einen Abgasturbolader**
Flap valve for an exhaust gas turbo charger
Clapet de fermeture pour une turbocompresseur

(30) Priorität: 22.10.2009 DE 102009050227
(43) Veröffentlichungstag der Anmeldung: 27.04.2011
(73) Patentinhaber: Bayerische Motoren Werke Aktiengesellschaft, 80809 München (DE)
(72) Erfinder: Wibmer, Michael, 81379 Muenchen (DE); Velthuis, Jan, 86899 Landsberg (DE)

(56) Entgegenhaltungen:
- DE-A1-102006 021 185
- DE-A1-102007 018 618
- DE-A1-102008 060 343
- DE-C1- 4 439 432

## Beschreibung

Die Erfindung betrifft eine Verschlussklappe für einen Abgasturbolader mit den Merkmalen aus dem Oberbegriff des Patentanspruchs 1.

Sie geht von der deutschen Offenlegungsschrift DE 10 2006 021 185 A1 aus. Aus dieser ist eine Verschlussklappe für einen Abgasturbolader zum Verschließen eines Strömungskanals bekannt. Er besteht aus einem, in einer Lagerung drehbar gelagerten Betätigungsarm, an dessen der Lagerung abgewandten Seite ein Verschlussdeckel anordenbar ist. Hierfür weist der Betätigungsarm eine tangential zur Drehrichtung ausgerichtete Öffnung auf zur Aufnahme eines an den Verschlussdeckel, weitgehend senkrecht zu einer Dichtebene ausgerichtet, angeordneten Domes, zur spielbehafteten Befestigung des Verschlussdeckels an dem Betätigungsarm. Der Betätigungsarm weist verschlussdeckelseitig eine die Öffnung umgreifende Nut auf, in die ein korrespondierender, an den Verschlussdeckel angeformter erhabener Bereich eingreift, wobei von einem Bereich radial außerhalb der Nut ein Anschlag für den Verschlussdeckel auf dem Betätigungsarm ausgebildet ist. Durch die erfindungsgemäße Ausgestaltung soll ein dynamisches Hämmern der Verschlusskappe deutlich verringert werden, wodurch der Abgasturbolader eine längere Lebensdauer aufweisen soll und trotzdem gewährleistet ist, dass das Klappensystem genügend Mobilität aufweist, um seine Anforderung bezüglich Dichtheit zu erfüllen.

In der Praxis hat sich jedoch herausgestellt, dass durch die vorgeschlagene Maßnahme das Hämmern der Verschlussklappe zwar reduziert, aber nicht restlos beseitigt wird.

Aus diesem Grund liegt der Erfindung die Aufgabe zugrunde, das Hämmern der Verschlussklappe aufgrund von gasdynamischen Kräften nochmals deutlich zu reduzieren.

Diese Aufgabe wird durch das Merkmal im kennzeichnenden Teil des Patentanspruchs 1 gelöst.

Die erfindungsgemäße Ausgestaltung kann selbstverständlich bei jedem Abgasturbolader zum Einsatz kommen, jedoch sind Twin-Scroll-Abgasturbolader, bei denen ein wechselweiser Gasstoß auftritt, besonders prädestiniert. Darüber hinaus kann dieses Konzept in vorteilhafter Weise kostengünstig in die Geometrie eines vorhandenen Klappensystems implementiert werden.

Die Ausgestaltung gemäß Patentanspruch 2 ist eine besonders vorteilhafte Weiterbildung der Erfindung.

Die Ausgestaltungen gemäß der Patentansprüche 3 und 4 lassen eine geringe Relativkippbewegung des Verschlussdeckels relativ zum Betätigungsarm zu, wodurch in vorteilhafter Weise das notwendige Schließverhalten der Verschlussklappe erzielt wird.

Im Folgenden ist die Erfindung anhand eines besonders bevorzugten Ausführungsbeispiels in zwei Figuren näher erläutert.
- Fig. 1: zeigt eine Aufsicht auf eine dreidimensional dargestellte, teilge- schnittene erfindungsgemäße Verschlussklappe.
- Fig. 2: zeigt eine Aufsicht auf eine erfindungsgemäße Verschlussklap- pe mit der Lage der erfindungsgemäßen drei Auflagepunkten bezüglich einer Gaskrafischwerpunktlage.

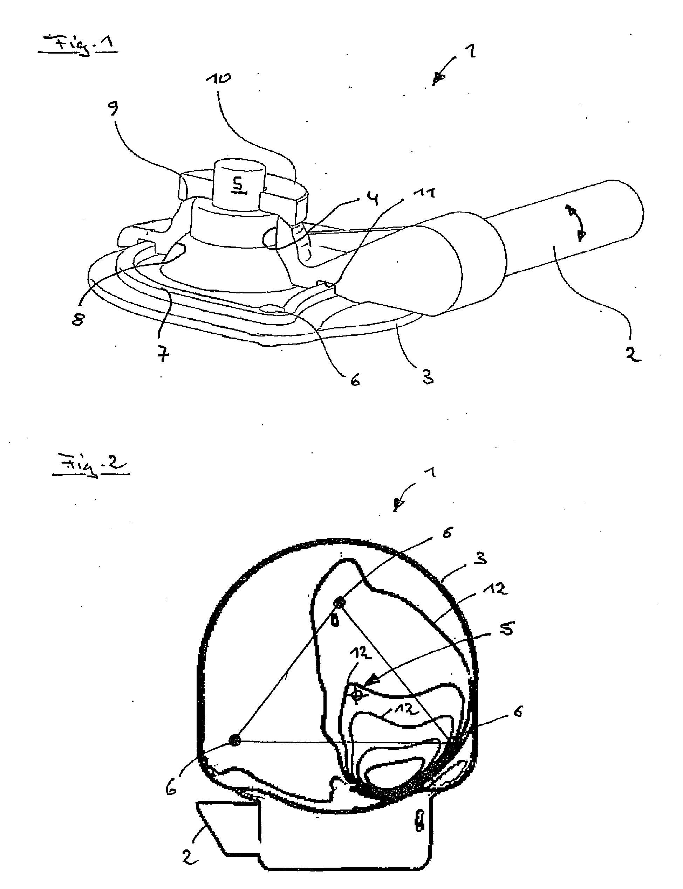

Fig. 1 zeigt eine Aufsicht auf eine dreidimensional dargestellte, teilgeschnittene erfindungsgemäße Verschlussklappe 1 für einen Abgasturbolader zum Verschließen eines nicht dargestellten Strömungskanals. Die Verschlussklappe 1 besteht im Wesentlichen aus einem, in einer Lagerung drehbar gelagerten Betätigungsarm 2, an dessen der Lagerung abgewandten Seite ein Verschlussdeckel 3 anordenbar ist. Eine Drehrichtung der Verschlussklappe 1 ist symbolisch mit einem Doppelpfeil dargestellt. Für den Verschlussdeckel 3 weist der Betätigungsarm 2 eine weitgehend tangential zur Drehrichtung ausgerichtete Öffnung 4 auf, zur Aufnahme eines an den Verschlussdeckel 3 weitgehend senkrecht zu einer Dichtebene ausgerichtet angeordneten Dornes zur spielbehafteten Befestigung des Verschlussdeckels 3 an dem Betätigungsarm 2.

Erfindungsgemäß weist der Verschlussdeckel 3 auf seiner dem Betätigungsarm 2 zugewandten Seite drei erhabene Auflagepunkte 6 auf, von denen nur einer in Fig. 1 ersichtlich ist, die eine in Fig. 2 dargestellte Gaskraftschwerpunktlage S umschließen. Weiter weist der Betätigungsarm verschlussdeckelseitig eine die Öffnung 4 umgreifende Nut 11 auf, in die ein korrespondierender, an den Verschlussdeckel 3 angeformter erhabener Bereich 7 eingreift. In diesem besonders bevorzugten Ausführungsbeispiel sind die Auflagepunkte 6 auf dem erhabenen Bereich 7 angeordnet. Weiter ist eine erste Auflagefläche 8 des Verschlussdeckels 3 auf dem Betätigungsarm 2 kalottenförmig ausgeformt. Hierdurch ist eine leichte Kippbewegung des Verschlussdeckels 3 bezüglich des Betätigungsarms 2 möglich, wodurch in vorteilhafter Weise die notwendige Dichtfunktion für den zu verschließenden Strömungskanal erzielt wird.

Weiter ist ein Befestigungselement 10 vorgesehen zur Befestigung des Verschlussdeckels an dem Betätigungsarm 2. Bevorzugt wird der Verschlussdeckel 3 durch Nieten bzw. Stauchen an dem Betätigungsarm 2 befestigt. Zwischen dem Betätigungsarm 2 und dem Befestigungselement 10 ist eine zweite Auflagefläche 9, die konzentrisch, ebenfalls kalottenförmig zur ersten Auflagefläche 8 ist. Konzentrisch bedeutet, dass beide Kalotten den gleichen Kreismittelpunkt aufweisen. Durch diese kalottenförmigen Auflageflächen 8, 9 ist ein besonders gutes geringes Kippverhalten des Verschlussdeckels 3 bezüglich dem Betätigungsarm 2 aufgrund der spielbehafteten Befestigung möglich, wodurch höchste Dichtheit für den Strömungskanal erzielt wird.

Fig. 2 zeigt eine Aufsicht auf eine erfindungsgemäße Verschlussklappe 1, wobei auf dem Verschlussdeckel 3 die drei Auflagepunkte 6 eingezeichnet sind. Konzentrische Linien 12 umspannen eine Gaskraftschwerpunktlage S. Die Linien 12 entsprechen einer gemittelten, an dem Verschlussdeckel 3 anliegenden Gaskraft, wobei die mittlere Gaskraft nach innen höher wird. Die Gaskraftschwerpunktlage S entspricht hierbei der größten Gaskraft gemittelt über die gesamte Fläche des Verschlussdeckels 3. Erfindungsgemäß umspannen die Verbindungslinien der drei erhabenen Auflagepunkte 6 die Gaskraftschwerpunktlage S.

Da sich die Gaskraftschwerpunktlage S erfindungsgemäß in diesem Dreiecksverbund befindet, wird sichergestellt, dass sich eine stabile Lage der Verschlussklappe 1 einstellt und ein Hämmern des Verschlussdeckels 3 auf den Betätigungsarm 2 beim Betrieb sicher unterbunden ist. Besonders wichtig ist dies bei Twin-Scroll-Abgasturboladem, wo ein wechselweiser Gasstoß auftritt. Dieses vorgeschlagene, erfindungsgemäße Konzept kann weiter kostengünstig in die Geometrie eines bekannten Klappensystems implementiert werden. Ziel ist es, mit Standardwerkstoffen ein robustes Gesamtsystem zu erzielen.

### Bezugszeichenliste:

- 1.: Verschlussklappe
- 2.: Betätigungsarm
- 3.: Verschlussdeckel
- 4.: Öffnung
- 5.: Dorn
- 6.: Auflagepunkt
- 7.: erhabener Bereich
- 8.: erste Auflagefläche
- 9.: zweite Auflagefläche
- 10.: Befestigungselement
- 11.: Nut

- S: Gaskraftschwerpunktlage

## Patentansprüche

1. Verschlussklappe (1) für einen Abgasturbolader zum Verschließen eines Strömungskanals, bestehend aus einem in einer Lagerung drehbar gelagerten Betätigungsarm (2) an dessen der Lagerung abgewandten Seite ein Verschlussdeckel (3) anordenbar ist, wobei der Betätigungsarm (2) eine tangential zur Drehrichtung ausgerichtete Öffnung (4) aufweist zur Aufnahme eines an den Verschlussdeckel (3) weitgehend senkrecht zu einer Dichtebene ausgerichtet angeordneten Dornes (5) zur spielbehafteten Befestigung des Verschlussdeckels (3) an dem Betätigungsarm (2),
**dadurch gekennzeichnet, dass** der Verschlussdeckel (3) auf seiner dem Betätigungsarm (2) zugewandten Seite drei erhabene Auflagepunkte (6) aufweist, die eine Gaskraftschwerpunktlage (12) umschließen.

2. Verschlussklappe nach Patentanspruch 1, wobei der Betätigungsarm verschlussdeckelseitig eine die Öffnung umgreifende Nut aufweist in die ein korrespondierender, an den Verschlussdeckel angeformter erhabener Bereich eingreift,
**dadurch gekennzeichnet, dass** die Auflagepunkte (6) auf dem erhabenen Bereich (7) angeordnet sind.

3. Verschlussklappe nach Patentanspruch 1 oder 2,
**dadurch gekennzeichnet, dass** eine erste Auflagefäche (8) des Verschlussdeckels (3) auf dem Betätigungsarm (2) kalottenförmig ausgeformt ist.

4. Verschlussklappe nach einem der Patentansprüche 1 bis 3, wobei ein Befestigungselement zur Befestigung des Verschlussdeckels an dem Betätigungsarm vorgesehen ist,
**dadurch gekennzeichnet, dass** eine zweite Auflagefläche (9) des Betätigungsarmes (2) für das Befestigungselement (10) konzentrisch kalottenförmig zur ersten Auflagefläche (8) ist.

## Claims

1. A closure flap (1) for an exhaust gas turbocharger for closing a flow channel, comprising an actuating arm (2), which is rotatably mounted in a bearing and on the side of which remote from the bearing a closure lid (3) is arranged, the actuating arm (2) having an opening (4) oriented tangentially with respect to the direction of rotation to receive a mandrel (5) arranged on the closure lid (3) and oriented substantially perpendicular to a sealing plane to fasten the closure lid (3) with play to the actuating arm (2),
**characterised in that** the closure lid (3), on its side facing the actuating arm (2), has three raised contact points (6), which surround a gas force centre of gravity position (12).

2. A closure flap according to claim 1, wherein the actuating arm has, on the closure lid side, a groove encompassing the opening, in which a corresponding raised region formed on the closure lid engages,
**characterised in that** the contact points (6) are arranged on the raised region (7).

3. A closure flap according to claim 1 or claim 2,
**characterised in that** a first support face (8) of the closure lid (3) is formed in a spherical cap shape on the actuating arm (2).

4. A closure flap according to any one of claims 1 to 3, wherein a fastening element is provided to fasten the closure lid on the actuating arm,
**characterised in that** a second support face (9) of the actuating arm (2) for the fastening element (10) is concentrically spherical cap-shaped with respect to the first support face (8).

## Revendications

1. Clapet de fermeture (1) de turbocompresseur de gaz d'échappement pour fermer un canal d'écoulement, comprenant :
- un bras d'actionnement (2) monté à rotation dans un palier et dont le côté opposé au palier porte un volet d'obturation (3),
* le bras d'actionnement (2) ayant une ouverture (4) dirigée tangentiellement au sens de rotation pour recevoir une broche (5) du volet d'obturation (3) pratiquement perpendiculaire au plan d'étanchéité, pour fixer le volet d'obturation (3) au bras d'actionnement (2) par une fixation avec du jeu,
clapet **caractérisé en ce que**
sur son côté tourné vers le bras d'actionnement (2), le volet d'obturation (3) comporte trois points d'appui (6) en saillie qui entourent la position du centre de gravité (12) de la force exercée par les gaz.

2. Clapet de fermeture selon la revendication 1,
dont le bras d'actionnement du côté du volet d'obturation, une rainure entourant l'ouverture et dans laquelle pénètre une zone en relief, correspondante, formée sur le volet d'obturation,
**caractérisé en ce que**
les points d'appui (6) se trouvent sur la zone (7) en relief.

3. Clapet de fermeture selon la revendication 1 ou 2,
**caractérisé en ce qu'**
une première surface d'appui (8) du volet d'obturation (3) est réalisée en forme de calotte sur le bras d'actionnement (2).

4. Clapet de fermeture selon l'une des revendications 1 à 3,
avec un élément de fixation prévu sur le bras d'actionnement pour la fixation du volet d'obturation,
**caractérisé par**
une seconde surface d'appui (9) du bras d'actionnement (2) pour l'élément de fixation (10), qui est en forme de calotte concentrique à la première surface d'appui (8).
